# EUROPÄISCHE PATENTSCHRIFT

(11) **EP 3 684 494 B1**
(45) Veröffentlichungstag und Bekanntmachung des Hinweises auf die Patenterteilung: **09.11.2022**
(21) Anmeldenummer: 18768831.2
(22) Anmeldetag: 06.09.2018
(51) Int. Cl.: B01D 35/027, B01D 29/21, B01D 29/23, B01D 29/54, B01D 29/58

(54) **FILTERVORRICHTUNG**
FILTER DEVICE
DISPOSITIF DE FILTRATION

(30) Priorität: 20.09.2017 DE 102017008812
(43) Veröffentlichungstag der Anmeldung: 29.07.2020
(60) Teilanmeldung: 22181717.4
(73) Patentinhaber: Hydac Filtertechnik GmbH, 66280 Sulzbach/Saar (DE)
(72) Erfinder: SCHWENDER, Matthias, 66459 Kirkel (DE); KOCH, Edwin, 66636 Tholey (DE); KLEEMANN, Daniel, 57515 Alsting (FR); LEHMANN, Ute, 66583 Spiesen/ Elversberg (DE); NENNO, Alexander, 66606 St. Wendel (DE); SCHNEIDER, André Michael, 66399 Mandelbachtal (DE)
(74) Vertreter: Bartels und Partner, Patentanwälte
(86) Internationale Anmeldenummer: PCT/EP2018/073997
(87) Internationale Veröffentlichungsnummer: WO 2019/057505

(56) Entgegenhaltungen:
- EP-A1- 2 156 874
- EP-A2- 0 793 990
- DE-A1-102004 061 078
- DE-A1-102014 009 707
- US-A1- 2016 121 243

## Beschreibung

Die Erfindung betrifft eine Filtervorrichtung für Getriebeöl mit den Merkmalen im Oberbegriff von Anspruch 1.

Um über lange Betriebszeiträume hinweg einen sicheren und störungsfreien Betrieb von Getrieben sicherzustellen, ist es Stand der Technik, für das Getriebeöl eine Filtervorrichtung vorzusehen, vgl. DE 10 2007 023 641 B4, in der eine Filtervorrichtung, die als Saugfilter arbeitet, offenbart ist. Die Auslegung als Saugfilter zeichnet sich im Vergleich zu einer Druckölfiltervorrichtung durch einen wesentlich geringeren Bedarf an Einbauraum aus, so dass sie, anders als Druckölfiltervorrichtungen, die üblicherweise in einem Nebenstrom arbeiten und innerhalb des Getriebegehäuses oder am Getriebegehäuse außen angebracht sind, ohne Schwierigkeiten unmittelbar in den Ölsumpf der Ölwanne des betreffenden Getriebes einbaubar sind. Für eine optimale Pflege des Getriebeöls ist es vorteilhaft, für den Filtervorgang Filtermedien mit unterschiedlichen Filtereigenschaften vorzusehen, die vom Unfiltrat durchströmbar sind. Bei der genannten, bekannten Filtervorrichtung sind hierfür zwei Filtermedien in Form eines Grobfiltermediums und eines Feinfiltermediums vorgesehen, die jeweils durch ein Flachfilter gebildet sind, die in der betreffenden Ölwanne übereinanderliegend angeordnet sind.

Die DE 10 2004 061 078 A1 beschreibt eine Filtervorrichtung für Getriebeöl, mit einem Filterelement, das in eine Getriebeölwanne einsetzbar ist und dessen Filtermedium eine Unfiltratseite von einem Filtratraum trennt, der mit einem Auslass fluidführend verbunden ist, an den eine Unterdruck-Fördereinrichtung, wie eine Saugölpumpe, anschließbar ist, wobei das Filtermedium des Filterelements mindestens eine Strukturlage mit einer vorgegebenen Flächenausdehnung und mit vorgebbaren Filtereigenschaften sowie mindestens eine weitere Strukturlage mit vorgebbaren Filtereigenschaften aufweist, wobei die Flächenausdehnung der weiteren Strukturlage verschieden ist von der Flächenausdehnung der ersten Strukturlage, wobei die einzelnen Strukturlagen einen inneren Filterhohlraum umfassen, wobei die einzelnen Strukturlagen mit der gleichen Art Falten plissiert sind, und wobei sich die plissierten Strukturlagen in axialer Ausrichtung zwischen zwei Endkappen des Filterelementes erstrecken.

Weitere Filtervorrichtungen gehen aus der EP 0 793 990 A2, der EP 2 156 874 A1, der DE 10 2014 009 707 A1 und der US 2016/0121243 A1 hervor.

Ausgehend von diesem Stand der Technik stellt sich die Erfindung die Aufgabe, eine Filtervorrichtung zur Verfügung zu stellen, die den Filtervorgang im Durchstrom durch Filtermedien unterschiedlicher Filtereigenschaft ermöglicht und sich dabei durch eine besonders platzsparende Bauweise auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 sieht die Erfindung zur Lösung dieser Aufgabe vor, dass in Durchströmungsrichtung des abzureinigenden Fluidstroms gesehen die jeweilige Strukturlage mit der höheren Filterfeinheit einer vorangehenden Strukturlage mit jeweils einer geringeren Filterfeinheit nachfolgt, dass ein Filterelement in Form eines Flachfilters vorgesehen ist, dessen einen Filterhohlraum umgebendes Filtermedium in Form einer Filtermatte, bezogen auf eine parallel zu den Endkappen verlaufende Schnittebene, eine flache Querschnittsform mit großflächigen ebenen Breitseiten und schmalen, gerundeten Schmalseiten aufweist, und dass das Filterelement mit einer Breitseite einem Boden der zugeordneten Getriebeölwanne zugewandt ist. Derartige Ausführungsbeispiele zeichnen sich durch eine besonders geringe Bauhöhe und damit geringem Bedarf an Einbauraum aus.

Es ist ferner vorgesehen, dass die einzelnen Strukturlagen mit der gleichen Art Falten plissiert sind, dass sich die plissierten Strukturlagen in axialer Ausrichtung zwischen zwei Endkappen des Filterelementes erstrecken und dass in Durchströmungsrichtung des abzureinigenden Fluidstroms gesehen die jeweilige Strukturlage mit der höheren Filterfeinheit einer vorangehenden Strukturlage mit jeweils einer geringeren Filterfeinheit nachfolgt. Dadurch, dass anstelle der beim genannten Stand der Technik vorgesehenen, gesonderten und übereinanderliegenden Filtermedien Strukturlagen, die unterschiedliche Filtereigenschaften aufweisen, zu einem Filtermedium zusammengefasst sind, ist eine kompakte Bauweise realisierbar, die geringen Einbauraum benötigt und dadurch für den Einbau in die Ölwanne eines Getriebegehäuses in besonderem Maße geeignet ist. Da weiter erfindungsgemäß die jeweiligen Strukturlagen eine unterschiedliche Flächenausdehnung besitzen, so dass Strukturlagen unterschiedlicher Eigenschaften jeweils von einem Teilstrom des Saugstroms durchströmt sind, ist eine einfache Parallelschaltung der unterschiedlich gefilterten Saugstromteile erreicht.

Das Filtermedium ist hierfür derart ausgebildet, wie es auch in der DE 10 2004 061 078 A1 für ein Filterbauteil beschrieben ist, bei dem eine erste Strukturlage in der Art eines Hauptfilters ausgebildet ist und eine jeweils weitere Strukturlage in der Art eines Vorfilters. Wie in diesem Dokument ausgeführt, erstreckt sich die Vorfilterlage als erste Strukturlage mit einer vorgebbaren Flächenausdehnung und mit einer vorgebbaren Länge in der Art eines Längsstreifens, wobei auf der Oberseite der Strukturlage eine weitere zweite Strukturlage in der Art eines Hauptfilters mit einer vorgebbaren Länge angeordnet ist, die kleiner ist als die Länge des Vorfilters.

In Entsprechung zu dem genannten, bekannten Filterbauteil weist das Filtermedium Strukturlagen mit unterschiedlicher Filterfeinheit auf.

In der bei Filtermatten üblichen Weise können die Strukturlagen plissiert sein, vorzugsweise mit der gleichen Art und Anzahl der Falten, wobei die Strukturlagen ein- oder mehrlagig aufgebaut sein können.

Die plissierten Strukturlagen sind als Filtermatte zwischen Endkappen angeordnet und umgeben einen inneren Filterhohlraum. Dergestalt ist eine leicht einsetzbare und im Bedarfsfall auch tauschbare Baueinheit geschaffen, die ein standardisiertes Filterelement darstellt, was eine kostengünstige Lösung für das Getriebeölkonzept darstellt.

Bei einer Durchströmung der Filtermatte des Filterelements von innen nach außen, wobei der innere Filterhohlraum als Unfiltratseite mit dem Ölsumpf der zugeordneten Ölwanne in Fluidverbindung ist, kann die Filtermatte an der Außenseite eine die jeweiligen äußeren Strukturlagen umgebende Stützstruktur aufweisen. Bei Durchströmung der Filtermatte des Filterelements von außen nach innen, wobei der innere Filterhohlraum die Filtratseite bildet, kann die Filtermatte eine an der inneren Strukturlage anliegende innere Stützstruktur aufweisen.

Die Anordnung kann mit Vorteil so getroffen sein, dass das Filterelement in der Ölwanne in einem Innengehäuse aufgenommen ist, das einen zum inneren Filterhohlraum führenden Eingang, den das Filterelement umgebenden Filtratraum sowie einen von diesem zu einem Sauganschluss führenden Fluidausgang aufweist.

Der Fluideingang kann durch eine Öffnung im Boden des Innengehäuses gebildet sein.

Alternativ kann der Fluideingang durch ein zum Ölsumpf der Ölwanne führendes Flachrohr gebildet sein, das an einer Seitenwand des Gehäuses oder Innengehäuses angeordnet ist und in das ein Anschlussstutzen des Filterelements eingreift, der an der zugewandten Endkappe des Filterelements außermittig angeordnet ist und die Verbindung mit dem Filterhohlraum bildet.

Für die Verbindung des Filtratraums des Innengehäuses mit einem Sauganschluss kann die Anordnung mit Vorteil so getroffen sein, dass der Fluidausgang des Innengehäuses durch ein neben dem Flachrohr an der Seitenwand des Innengehäuses befindliches hohles Gehäuseteil gebildet ist, das einen Durchgang zwischen dem das Filterelement umgebenden Filtratraum des Innengehäuses und dem Sauganschluss bildet.

Für die Durchströmung der Filtermatte von außen nach innen kann die Anordnung mit besonderem Vorteil so getroffen sein, dass das Filterelement in der Ölwanne in einem Innengehäuse angeordnet ist, das zum Ölsumpf offen ist, einen rechteckförmigen Aufnahmeraum mit Langseiten und Schmalseiten für das Filterelement umgrenzt sowie eine sich entlang einer Schmalseite erstreckende Endwand aufweist, wobei sich an dieser der Sauganschluss befindet, mit dem ein Stutzen in Eingriff ist, der an der einen Endkappe des Filterelements einen Durchgang zum Filterhohlraum und damit ein Tragteil für das eine Ende des Filterelements bildet.

Bei dieser Anordnung kann die Endkappe am anderen Ende des Filterelements ein vorstehendes Fußteil bilden, das ein am Boden der Ölwanne aufstehendes Tragteil für das eine Ende des Filterelements bildet.

Nachstehend ist die Erfindung anhand von in der Zeichnung dargestellten Ausführungsbeispielen im Einzelnen erläutert. Es zeigen:
- Fig. 1: eine perspektivische Schrägansicht des ersten Ausführungsbeispiels der erfindungsgemäßen Filtervorrichtung, wobei das Gehäuse in der Nähe des oberen Bereichs mit horizontaler Schnittebene aufgeschnitten und mit bereichsweise aufgeschnittener Gehäuseseitenwand gezeigt ist;
- Fig. 2: eine perspektivische Schrägansicht des Ausführungsbeispiels, wobei das Gehäuse im vertikalen Winkelschnitt aufgeschnitten und das Filterelement ohne obere Endkappe dargestellt ist;
- Fig. 3: einen der Fig. 2 ähnlichen Winkelschnitt, wobei das Filterelement mit oberer Endkappe und mit das Filtermedium außenseitig umgebendem Stützrohr dargestellt ist;
- Fig. 4: eine perspektivische Schrägansicht eines zweiten Ausführungsbeispiels, wobei die obere Gehäuseabdeckung weggelassen ist;
- Fig. 5: einen Vertikalschnitt des Ausführungsbeispiels von Fig. 4;
- Fig. 6: eine vertikal aufgeschnitten gezeichnete perspektivische Schrägansicht des Ausführungsbeispiels von Fig. 4 und 5, wobei ein äußeres Stützrohr des Filtermediums nur teilweise dargestellt ist;
- Fig. 7: einen Vertikalschnitt eines dritten Ausführungsbeispiels der erfindungsgemäßen Filtervorrichtung, eingebaut in eine Ölwanne, von der lediglich ein Teil abgebrochen dargestellt ist;
- Fig. 8: eine perspektivische Schrägansicht eines vierten Ausführungsbeispiels der erfindungsgemäßen Filtervorrichtung mit einem in eine Ölwanne einbaubaren Innengehäuse, das ohne Deckelteil dargestellt ist;
- Fig. 9: einen schematisch vereinfachten Längsschnitt des Ausführungsbeispiels von Fig. 8;
- Fig. 10: eine perspektivische Schrägansicht des Ausführungsbeispiels von Fig. 8 und 9, wobei Teile des Innengehäuses weggeschnitten sind; und
- Fig. 11: eine der Fig. 10 entsprechende perspektivische Schrägansicht, wobei das Filterelement teilweise aufgeschnitten dargestellt ist.

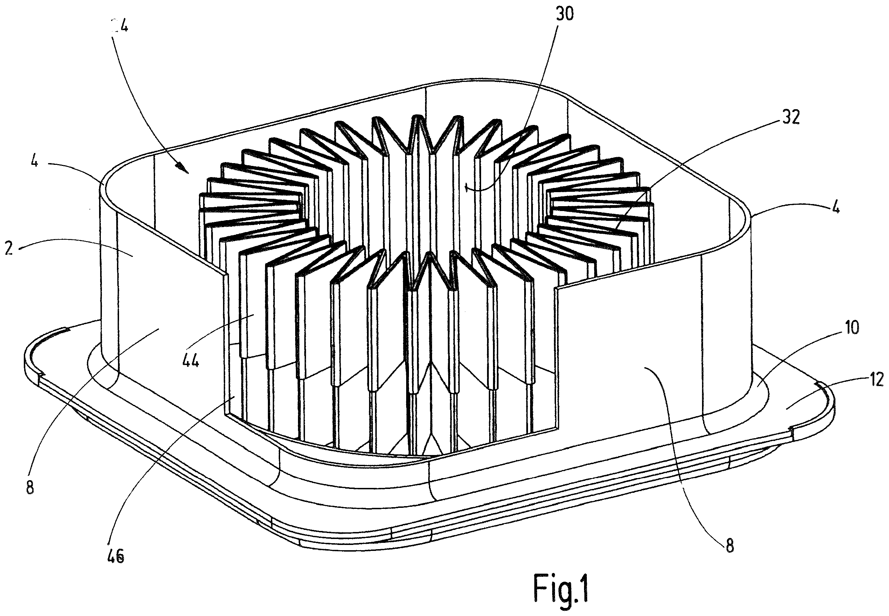

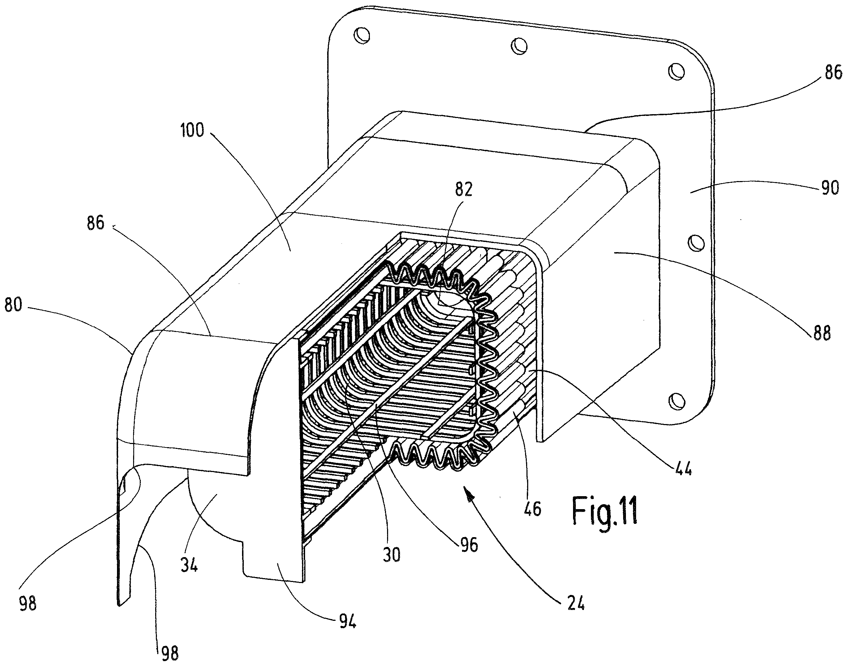

Die Ausführungsformen der Fig. 1 bis 3 und 8 bis 11 dienen lediglich der Erläuterung des Hintergrundes der Erfindung und sind nicht Gegenstand eines Anspruches.

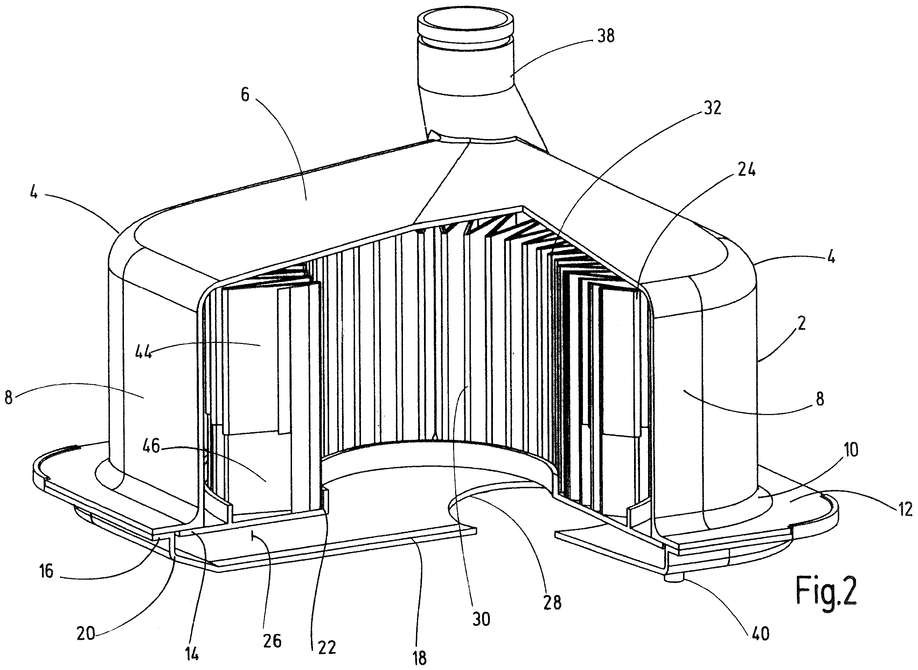

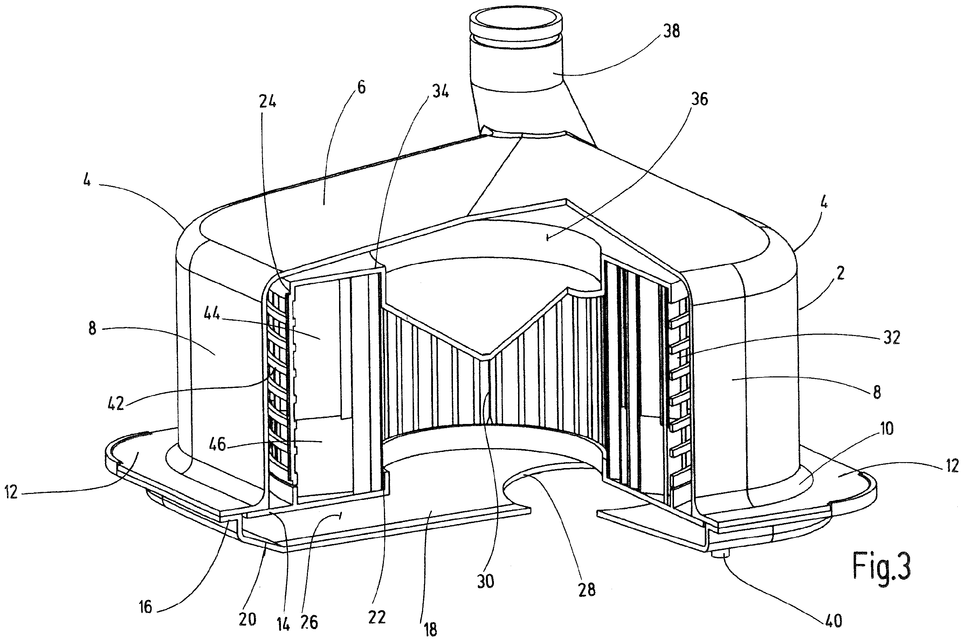

Das in Fig. 1 bis 3 gezeigte erste Ausführungsbeispiel weist ein Gehäuse 2 in Form einer Haube auf, die einen quadratischen Umriss mit abgerundeten Eckbereichen 4, einen ebenflächigen oberen Deckel 6 und von diesem vertikal nach unten verlaufende, ebene Seitenwände 8 aufweist. Am unteren Ende 10 gehen die Seitenwände 8 in einen horizontalen, flachen Endrand 12 über, der das gesamte offene untere Ende der Haube umgibt. Wie die Fig. 2 und 3 zeigen, bildet die Unterseite des Endrandes 12 die Anlagefläche für einen Ringkörper 14 sowie einen Umfangsrand 16 einer Bodenplatte 18. Der Umfangsrand 16 schließt sich an ein Wandteil 20 der Bodenplatte 18 an, das sich von der Ebene der Bodenplatte 18 schräg nach oben erstreckt, so dass das Gehäuse 2 mit dem auf dem Umfangsrand 16 aufliegenden Endrand 12 im Abstand von der Hauptebene der Bodenplatte 18 aufgeständert ist.

Der Ringkörper 14 ist Bestandteil einer unteren Endkappe 22 des in das Gehäuse 2 eingesetzten Filterelements 24. Durch die Anlage des Ringkörpers 14 am Endrand 12, der sich im Abstand von der Bodenplatte 18 befindet, ist daher zwischen dem Filterelement 24 und der Bodenplatte 18 ein Freiraum gebildet, der einen Filterbetrieb des Unfiltratraums 26 bildet, in den das Unfiltrat über einen in der Bodenplatte 18 gebildeten Fluideingang 28 einströmt. Bei aus einem Kunststoffwerkstoff, wie PA6, spritzgeformten Gehäuse 2 und aus Kunststoff bestehender Endkappe 22 kann die Verbindung des Ringkörpers 14 des in das Gehäuse 2 eingesetzten Filterelements 24 durch Schweißen oder Kleben hergestellt sein, bevor die Verbindung mit dem Umfangsrand 16 der Bodenplatte 18 gebildet ist. Wenn die Gehäuseteile aus metallischem Werkstoff hergestellt sind, können diese Verbindungen ebenfalls durch Kleben oder Schweißen gebildet sein.

Wie die Fig. 2 und 3 zeigen, ist die untere Endkappe 22 zum inneren Filterhohlraum 30 hin, der von der hohlzylinderförmigen Filtermatte 32 umgeben ist, offen, während der Filterhohlraum 30 am oberen Ende durch die obere Endkappe 34 des Filterelements 24 geschlossen ist. Bei Verlauf des Saugstroms vom inneren Filterhohlraum 30 nach außen bildet daher die Außenseite des Filterelements 24 im Gehäuse 2 einen Filtratraum 36, aus dem das Filtrat über einen Sauganschluss 38 austritt, der im Bereich des Deckels 6 an einem Eckbereich 4 angeformt ist. Um die Bodenplatte 18 in einem Abstand vom Boden der (nicht gezeigten) zugeordneten Ölwanne zu halten, sind an der Unterseite der Bodenplatte 18 Abstandhalter 40 gebildet, von denen lediglich einer in Fig. 2 und 3 sichtbar ist.

Jedes Filterelement 24 der hier vorgestellten Lösung weist endseitig unter Bildung einer einsetzbaren Baueinheit zwei Endkappen 22, 34 auf, die jedoch der einfacheren Darstellung wegen nicht immer, oder teilweise nur in Form mit einer Endkappe 22 oder 34, in den Figuren dargestellt sind.

Durch die Abstandhalter 40 ist der ungehinderte Zustrom beim Saugfilterbetrieb aus dem Ölsumpf zum inneren Filterhohlraum 30 hin sichergestellt. Gegen den von innen nach außen verlaufenden Saugstrom sind die Strukturlagen der Filtermatte 32 durch ein nur in Fig. 3 dargestelltes Stützrohr 42 abgestützt, das sich an der Außenseite der plissierten Filtermatte von unterer Endplatte 22 zu oberer Endplatte 34 erstreckt. Beim gezeigten Ausführungsbeispiel weist eine der Strukturlagen der mehrlagig aufgebauten Filtermatte 32 eine Flächenausdehnung auf, die sich von den übrigen Strukturlagen unterscheidet. Beim gezeigten Beispiel ist dies die mit 44 bezeichnete Strukturlage, die sich, von der oberen Endkappe 34 ausgehend, als außenliegende Lage über etwa die halbe axiale Länge der Filtermatte 32 und damit über die halbe Länge der übrigen Strukturlagen 46 erstreckt. Wie gezeigt, ist die Strukturlage 44 in den Faltenverbund der Filtermatte 32 eingefaltet. Die Strukturlage 44 bildet für den Saugstrom einen Filterbereich, dessen Filterfeinheit von der Filterfeinheit des angrenzenden Bereichs der Filtermatte 32 verschieden ist. Beim Saugfiltervorgang sind daher parallele Saugstromteile gebildet, in denen beispielsweise eine Vorfilterung und eine Feinfilterung gleichzeitig nebeneinander erfolgt.

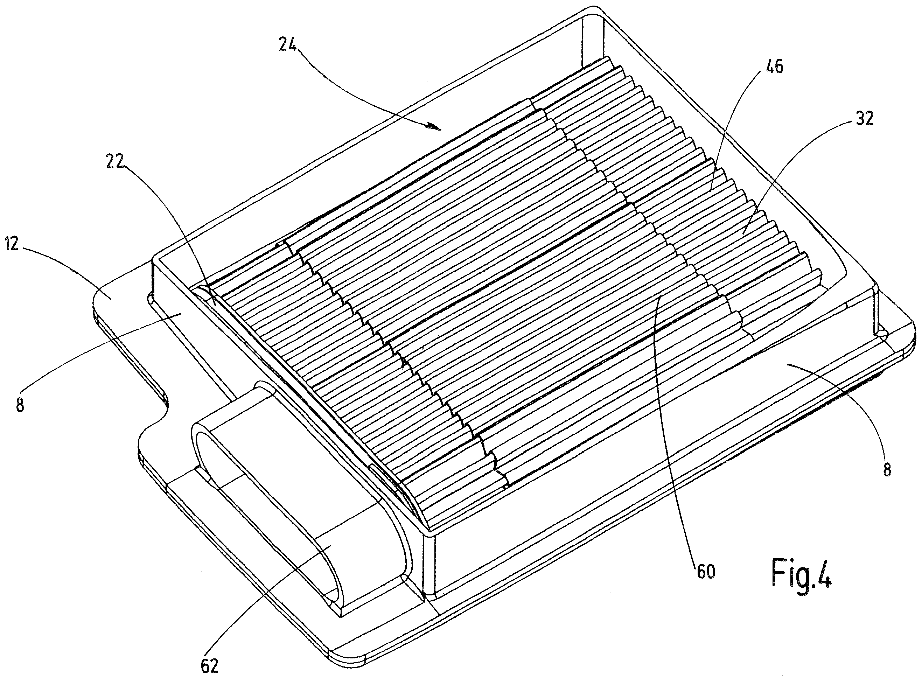

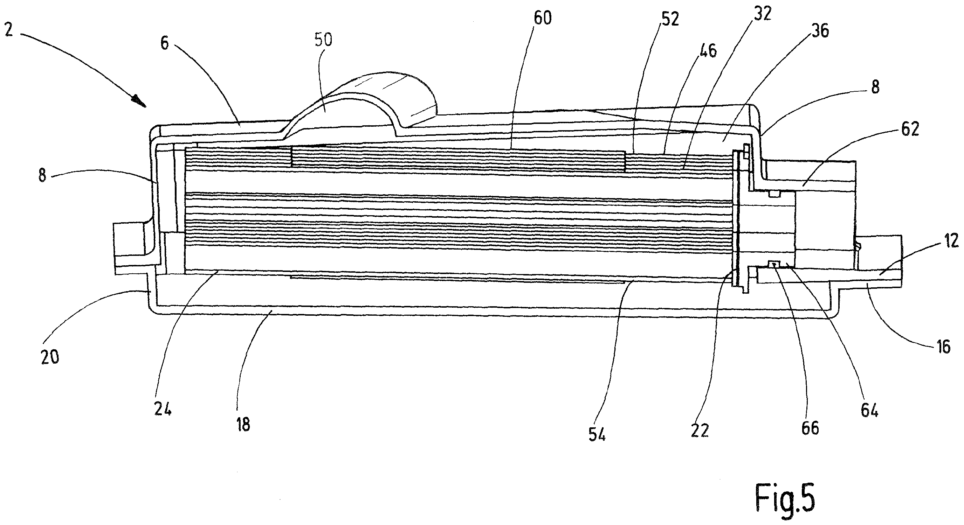

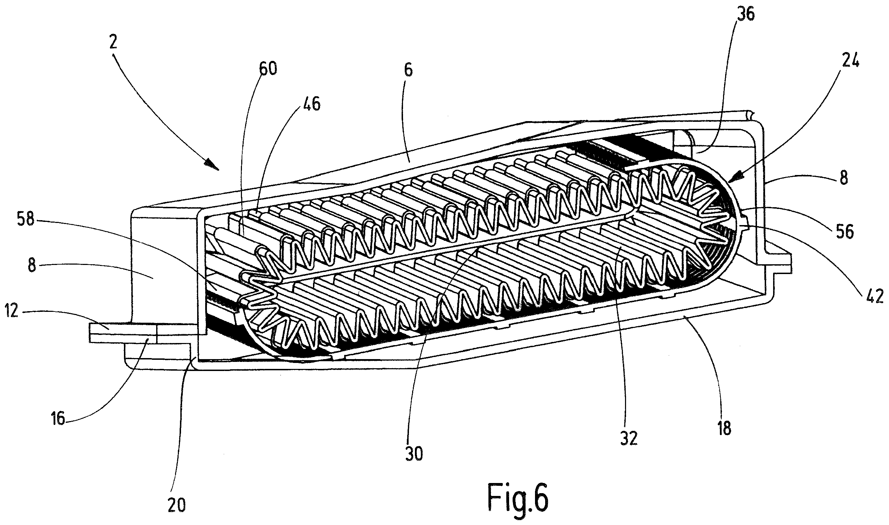

Die Fig. 4 bis 6 zeigen ein zweites Ausführungsbeispiel, bei dem ein Filterelement 24 in Form eines Flachfilters vorgesehen ist, bei dem die Filtermatte 32 keinen hohlen Kreiszylinder bildet, sondern eine flache Querschnittsform besitzt, bezogen auf eine zu den Endkappen 22 parallel verlaufende Schnittebene. Wie in diesen Figuren gezeigt, weist die Filtermatte 32 daher an ihrer Außenseite flache, großflächige Breitseiten 52 und 54 (s. Fig. 5) auf, sowie schmale, gerundete Flachseiten 56 und 58, s. Fig. 6. Wie beim ersten Ausführungsbeispiel weist die plissierte Filtermatte 32 eine äußere Strukturlage 60 auf, die gegenüber den übrigen Strukturlagen 46 eine unterschiedliche Filterfeinheit und eine unterschiedliche Flächenausdehnung besitzt. Anders als beim ersten Ausführungsbeispiel schließt sich diese zusätzliche Strukturlage 60 nicht an eine Endkappe 22 an, sondern ist im mittleren Bereich der axialen Länge der Filtermatte 32 angeordnet und endet vor der jeweils benachbarten Endkappe 22 in gleichen Abständen, die etwa einem Viertel der gesamten axialen Länge der Filtermatte 32 entsprechen.

Wie beim ersten Ausführungsbeispiel ist das Gehäuse 2 durch eine Haube gebildet, deren Deckel 6 in Fig. 4 weggelassen ist und die in Anpassung an die flache Form des Filterelements 24 eine geringe Bauhöhe besitzt. Wie beim ersten Ausführungsbeispiel ist das flache Gehäuse 2 auf einer Bodenplatte 18 aufgeständert, die entlang ihres Umfangsbereichs, wie beim ersten Ausführungsbeispiel, ein sich nach oben erstreckendes Wandteil 20 aufweist, auf dessen Umfangsrand 16 der untere Endrand 12 des Gehäuses 2 aufliegt. Im Unterschied zum ersten Ausführungsbeispiel ist an der Bodenplatte 18 keine Öffnung für den Zustrom aus dem Ölsumpf vorgesehen, sondern an einer Gehäuseseitenwand 8 befindet sich ein Flachrohr 62, das, s. Fig. 4, an der Seitenwand 8 außermittig angeordnet ist.

Wie Fig. 5 zeigt, weist das Filterelement 24 an seiner Endkappe 22 einen Anschlussstutzen 64 auf, der an der Endkappe 22 außermittig gebildet ist und in das Flachrohr 62 eingreift. Der mittels eines Dichtringes 66 abgedichtete Stutzen 64 stellt über das den Fluideingang bildende Flachrohr 62 die Verbindung zwischen dem Ölsumpf und dem inneren Filterhohlraum 30 des Filterelements 24 für den Saugfiltervorgang her. Für den Austritt des Saugstroms aus dem das Filterelement 24 umgebenden Filtratraum 36 ist am Deckel 6 des Gehäuses 2 ein Fluidausgang 50 gebildet, der nur in Fig. 5 dargestellt ist. Wie beim ersten Ausführungsbeispiel ist die Außenseite der Filtermatte 32 gegen den von innen nach außen verlaufenden Saugstrom mittels eines Stützrohres 42 abgestützt.

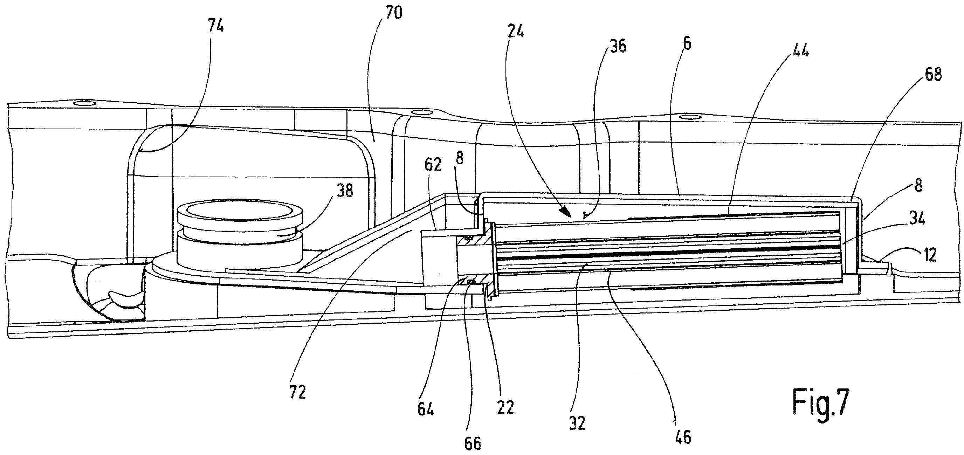

Die Fig. 7 zeigt ein drittes Ausführungsbeispiel, bei dem das Filterelement 24, das wie beim zweiten Ausführungsbeispiel als Flachfilter ausgebildet ist, in einem in eine Getriebeölwanne 70 eingebauten Innengehäuse 68 aufgenommen ist. Die Filtermatte 32 des Filterelements 24 weist in gleicher Weise, wie beim ersten Ausführungsbeispiel, eine sich durch Filterfeinheit und Flächenausdehnung von den anderen Strukturlagen 46 unterscheidende Strukturlage 44 auf, die sich, wie beim ersten Ausführungsbeispiel, von der Endkappe 34 ausgehend, etwa über die halbe axiale Länge der Filtermatte 32 erstreckt. Für den Fluideingang weist das Innengehäuse 68 das gleiche Flachrohr 62 auf, wie es, s. Fig. 4, beim zweiten Ausführungsbeispiel außermittig an der Seitenwand 8 des dortigen Gehäuses 2 vorgesehen ist. Ebenfalls, wie beim zweiten Ausführungsbeispiel, weist die Endkappe 22 des Filterelements 24 einen in das Flachrohr 62 eingreifenden Anschlussstutzen 64 auf, der die Verbindung zum inneren Filterhohlraum bildet. Für den Ausstrom aus dem die Filtermatte 32 umgebenden Filtratraum 36 weist das Innengehäuse 68 einen Fluidausgang auf, der durch ein hohles Gehäuseteil 72 gebildet ist, das neben dem Flachrohr 62, das außermittig an der Seitenwand 8 des Innengehäuses 68 angeordnet ist, einen Fluiddurchlass bildet, über den der Saugstrom aus dem Filtratraum 36 über das hohle Gehäuseteil 72 zum Sauganschluss 38 geführt ist, der sich bei diesem Ausführungsbeispiel in einer in der Ölwanne 70 gebildeten Anschlusskammer 74 befindet.

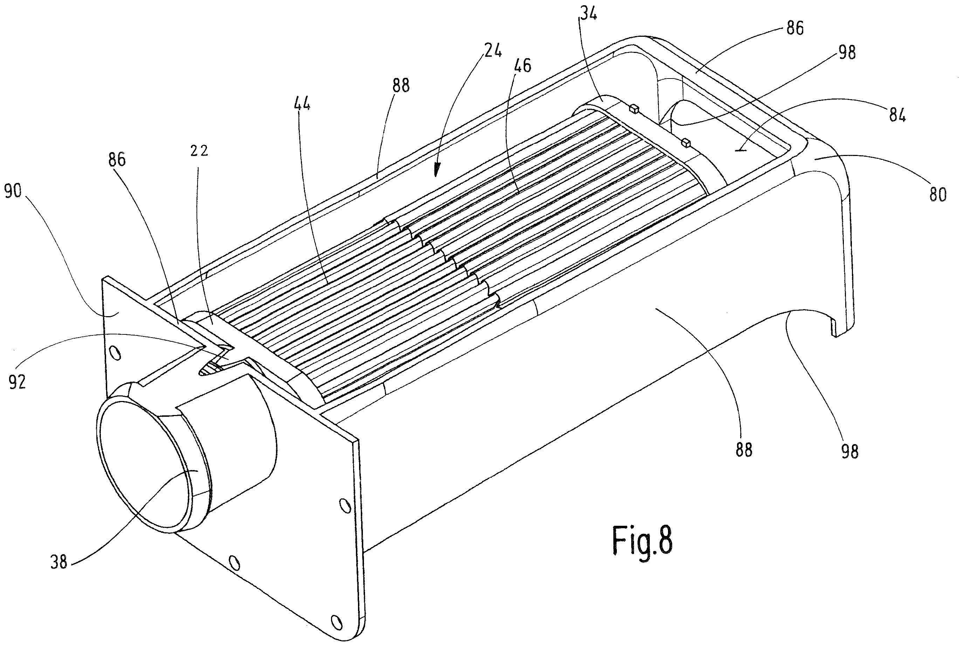

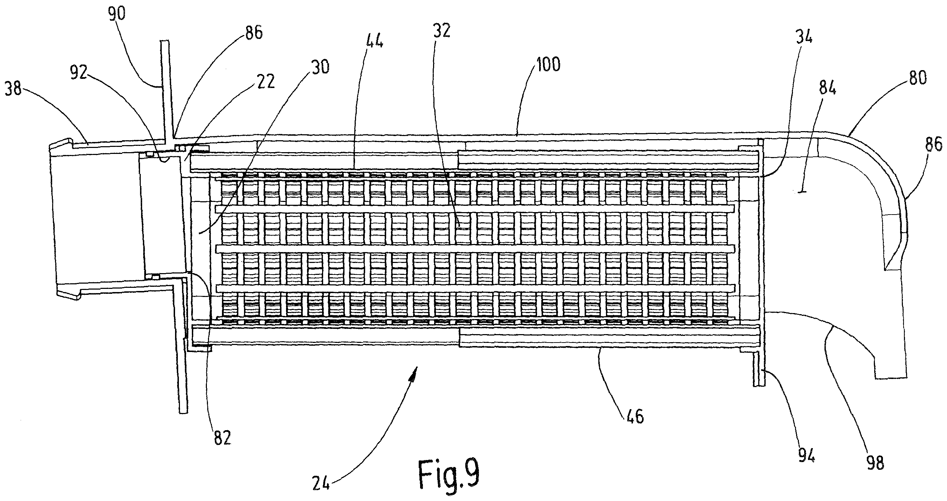

Die Fig. 8 bis 11 zeigen ein viertes Ausführungsbeispiel der erfindungsgemäßen Filtervorrichtung, bei dem das Filterelement 24 in einem in eine Getriebeölwanne einzubauenden Innengehäuse 80 angeordnet ist. Bei diesem Ausführungsbeispiel ist die zwischen den Endkappen 22 und 34 verlaufende Filtermatte 32 beim Filtervorgang von außen zum inneren Filterhohlraum 30 hin durchströmt. Dementsprechend ist, wie am deutlichsten in Fig. 9 gezeigt, an der einen Endkappe 22 ein Rohrstutzen 92 gebildet, der über einen Durchgang 82 in der Endkappe 22 die Verbindung zum inneren Filterhohlraum 30 herstellt, der die Filtratseite bildet.

In dem in das Innengehäuse 80 eingebauten Zustand greift der Stutzen 92 in den Sauganschluss 38 ein, der sich bei diesem Ausführungsbeispiel an einer Endwand 90 des Innengehäuses 80 befindet, die für das Innengehäuse 80 ein Trägerteil bildet, mit dem das Innengehäuse 80 in der betreffenden Ölwanne festlegbar ist.

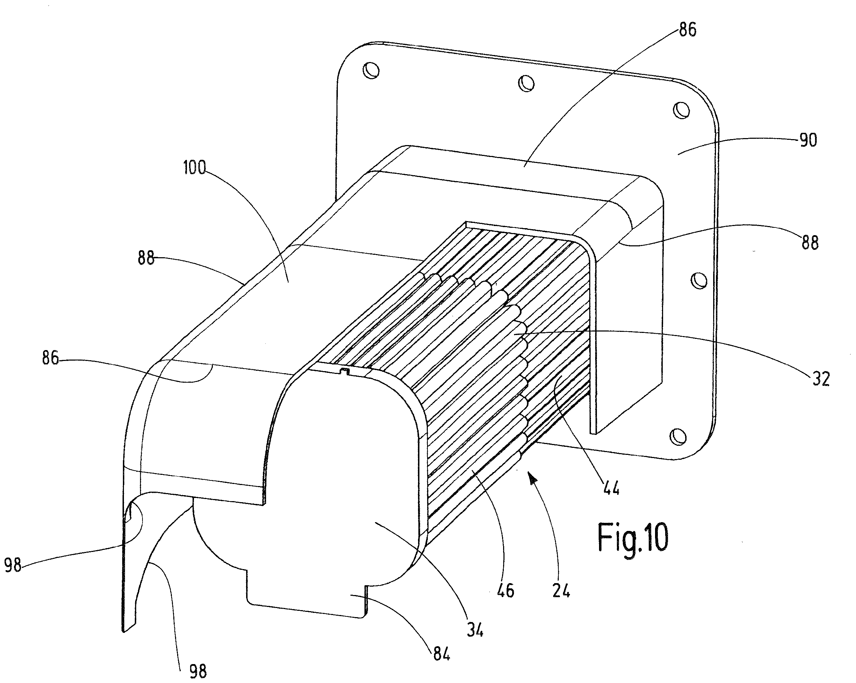

Wie Fig. 8 und 10 zeigen, hat die Endwand 90 die Form einer quadratischen Platte, die, s. Fig. 8, einen im Umriss rechteckförmigen Aufnahmeraum 84 für das Filterelement 24 an einer Schmalseite 86 begrenzt, von der sich in vertikalen Ebenen verlaufende Langseiten 88 zur gegenüberliegenden Schmalseite 86 hin erstrecken. Die Langseiten 88 sind keine vollflächigen Wandteile, sondern weisen, wie auch die der Endwand 90 entgegengesetzte Schmalseite 86, Ausnehmungen 98 auf, so dass der Aufnahmeraum 84 im Innengehäuse 80, das an der Oberseite durch ein in Fig. 8 weggelassenes, ebenes Deckteil 100 geschlossen ist, zum Ölsumpf hin offen ist.

Die Endkappe 34 des Filterelements 24, die der den Durchgang 82 aufweisenden Endkappe 22 entgegengesetzt ist, bildet eine ebene Verschlussplatte des von der Filtermatte 32 gebildeten Hohlkörpers. Dieser ist, anders als beim Ausführungsbeispiel von Fig. 1, kein Rundkörper, sondern hat, wie bei den Ausführungsbeispielen von Fig. 4 bis Fig. 7, eine unrunde Form, wobei die Querschnittsform beim Ausführungsbeispiel von Fig. 8 bis 11 einem Quadrat mit gerundeten Eckbereichen entspricht. Die Endkappe 34 besitzt eine entsprechende Form, abgesehen von einem Fußteil 94, das in Form einer flachen Leiste nach unten derart vorspringt, dass es beim Einbau in eine Getriebeölwanne am Boden der Ölwanne aufsteht und so ein Tragteil für das eine Ende des Filterelements 24 bildet, deren anderes Ende über den an der Endkappe 22 befindlichen Stutzen 92 an der Endwand 90 festgelegt ist, die ihrerseits ein Trägerteil des Innengehäuses 80 bildet.

Ein aus den einzelnen, übereinanderliegenden Strukturlagen gebildeter Vorfilter kann von der Fluiddurchlässigkeit her derart konzipiert sein, dass er hohe Fluidmengen durchlässt bei akzeptabler Schmutzaufnahmekapazität, die durch eine höhere Filterfeinheit des Hauptfilters, gebildet durch eine weitere Strukturlage, verbessert ist mit der Folge, dass bei einem sog. Kaltstart des Motors, wenn das zu filtrierende Getriebefluid noch kalt und entsprechend zähflüssig oder hochviskos ist, der Vorfilter wenig Durchflusswiderstand bietet und der Hauptfilter mit Teilen des Vorfilters zusammen die gewünschte Schmutzaufnahmekapazität dann sicherstellt.

Es können auch mehrere Strukturlagen mit unterschiedlichen Filtereigenschaften und unterschiedlicher Ausdehnung der Übereinanderlage miteinander kombiniert werden, was eine Vielzahl von Gestaltungsmöglichkeiten für das jeweilige Filterelement ergibt. So lassen sich beispielsweise sehr hohe Abscheideraten (Beta-Werte) bei unterschiedlichsten Differenzdrücken des zu filtrierenden Fluids oder die Abfiltrierung bestimmter Fluidanteile eines zu filtrierenden Fluids, die nur von einer bestimmten Strukturlage erfassbar sind, realisieren. Auch lässt sich in einfacher Weise durch sinnfälligen Austausch und Einsatz von Strukturlagen bei einer Neuerstellung des Filterelements im Sinne einer Art Baukastensystem dieses an die jeweilige Getriebe-Situationsaufgabe individuell anpassen, was so keine Entsprechung im Stand der Technik hat. Besonders vorteilhaft ist es, die jeweilige Überdeckung derart zu wählen, dass eine auf eine andere Strukturlage aufgelegte Strukturlage einen gleichen Randabstand zu beiden Längsseiten der anderen Strukturlage aufweist, was das Durchströmverhalten des Filterelements mit Fluid verbessert. Unerheblich ist, ob die das Hauptfilter bildende Feinfilterlage an einer der Endkappen anliegend oder im Abstand von beiden Endkappen angeordnet ist.

## Patentansprüche

1. Filtervorrichtung für Getriebeöl, mit einem Filterelement (24), das in eine Getriebeölwanne (70) eingesetzt ist und dessen Filtermedium (32) eine Unfiltratseite von einem Filtratraum trennt, der mit einem Auslass (38, 50, 72) fluidführend verbunden ist, an den eine Unterdruck-Fördereinrichtung, wie eine Saugölpumpe, anschließbar ist, wobei das Filtermedium (32) des Filterelements (24) mindestens eine Strukturlage (46) mit einer vorgegebenen Flächenausdehnung und mit vorgebbaren Filtereigenschaften sowie mindestens eine weitere Strukturlage (44; 60) mit vorgebbaren Filtereigenschaften aufweist, wobei die Flächenausdehnung der weiteren Strukturlage (44; 60) verschieden ist von der Flächenausdehnung der ersten Strukturlage (46), wobei die einzelnen Strukturlagen (44, 46, 60) einen inneren Filterhohlraum (30) umfassen, wobei die einzelnen Strukturlagen (44, 46, 60) mit der gleichen Art Falten plissiert sind, und wobei sich die plissierten Strukturlagen (44, 46, 60) in axialer Ausrichtung zwischen zwei Endkappen (22, 34) des Filterelementes (24) erstrecken, **dadurch gekennzeichnet, dass** in Durchströmungsrichtung des abzureinigenden Fluidstroms gesehen die jeweilige Strukturlage (44; 60) mit der höheren Filterfeinheit einer vorangehenden Strukturlage (46) mit jeweils einer geringeren Filterfeinheit nachfolgt, dass das Filterelement (24) in Form eines Flachfilters vorgesehen ist, dessen den Filterhohlraum (30) umgebendes Filtermedium in Form einer Filtermatte (32), bezogen auf eine parallel zu den Endkappen (22, 34) verlaufende Schnittebene, eine flache Querschnittsform mit großflächigen ebenen Breitseiten (52, 54) und schmalen, gerundeten Schmalseiten (56, 58) aufweist, und dass das Filterelement (24) mit einer Breitseite (54) einem Boden der zugeordneten Getriebeölwanne (70) zugewandt ist.

2. Filtervorrichtung nach Anspruch 1, **dadurch gekennzeichnet, dass** die Strukturlagen (44, 46, 60) ein- oder mehrlagig aufgebaut sind.

3. Filtervorrichtung nach einem der vorstehenden Ansprüche, **dadurch gekennzeichnet, dass** zur Durchströmung der Filtermatte (32) von innen nach außen der innere Filterhohlraum (30) als Unfiltratseite mit dem Ölsumpf der zugeordneten Ölwanne (70) in Fluidverbindung ist und dass die Filtermatte (32) an der Außenseite eine die jeweiligen äußeren Strukturlagen (44, 46, 60) umgebende Stützstruktur (42) aufweist.

4. Filtervorrichtung nach einem der vorstehenden Ansprüche, **dadurch gekennzeichnet, dass** bei Durchströmung der Filtermatte (32) durch den Saugstrom von außen nach innen, wobei der innere Filterhohlraum (30) die Filtratseite bildet, die Filtermatte (32) eine an der inneren Strukturlage (44,46, 60) anliegende innere Stützstruktur (96) aufweist.

5. Filtervorrichtung nach einem der vorstehenden Ansprüche, **dadurch gekennzeichnet, dass** das Filterelement (24) in der Ölwanne (70) in einem Innengehäuse (68) aufgenommen ist, das einen zum inneren Filterhohlraum (30) führenden Eingang (62), den das Filterelement (24) umgebenden Filtratraum (36) und einen von diesem zu einem Sauganschluss führenden Fluidausgang (72) aufweist.

6. Filtervorrichtung nach Anspruch 5, **dadurch gekennzeichnet, dass** der Fluideingang durch eine Öffnung (28) im Boden (18) des Gehäuses (2) gebildet ist.

7. Filtervorrichtung nach Anspruch 5 oder 6, **dadurch gekennzeichnet, dass** der Fluideingang durch ein zum Ölsumpf der Ölwanne (70) führendes Flachrohr (62) gebildet ist, das an einer Seitenwand (8) des Gehäuses (2) oder Innengehäuses (68) angeordnet ist und in das ein Anschlussstutzen (64) des Filterelements (24) eingreift, der an der zugewandten Endkappe (22) des Filterelements (24) außermittig angeordnet ist und die Verbindung mit dem Filterhohlraum (30) bildet.

8. Filtervorrichtung nach Anspruch 7, **dadurch gekennzeichnet, dass** der Fluidausgang des Innengehäuses (68) durch ein neben dem Flachrohr (62) an der Seitenwand (8) des Innengehäuses (68) befindliches Gehäuseteil (72) gebildet ist, das einen Durchgang zwischen dem das Filterelement (24) umgebenden Filtratraum (36) des Innengehäuses (68) und dem Sauganschluss (38) bildet.

## Claims

1. Filter apparatus for transmission oil, having a filter element (24), which is inserted in a transmission oil pan (70), the filter medium (32) in said filter element separating an unfiltered medium side from a filtrate chamber, which is connected in a fluid-conveying manner to an outlet (38, 50, 72), to which a vacuum conveying device, such as a suction oil pump, may be connected, the filter medium (32) of the filter element (24) comprising at least one structural layer (46) with a pre-defined surface area and with pre-definable filter properties as well as at least one further structural layer (44; 60) with pre-definable filter properties, the surface area of the further structural layer (44; 60) being different from the surface area of the first structural layer (46), the individual structural layers (44, 46, 60) surrounding an inner filter cavity, the individual structural layers (44, 46, 60) being pleated with the same kind of folds, and the pleated structural layers (44, 46, 60) extending in the axial direction between two end caps (22, 34) of the filter element (24), **characterised in that**, viewed in the throughflow direction of the fluid flow to be cleaned, the respective structural layer (44; 60) with the higher filter grade follows a preceding structural layer (46) with a lower filter grade in each case, **in that** the filter element (24) is provided in the form of a flat filter, the filter medium, in the form of a filter mat (32), surrounding the filter cavity (30) of said flat filter, referred to a cutting plane running in parallel with the end caps (22,34), comprising a flat cross-sectional shape with large, flat wide sides (52, 54) and narrow, rounded narrow sides (56, 58), and **in that** one wide side (54) of the filter element (24) faces a base of the associated transmission oil pan (70).

2. Filter apparatus according to claim 1, **characterised in that** the structural layers (44, 46, 60) are designed to be single or multiple-layered.

3. Filter apparatus according to any of the preceding claims, **characterised in that**, to permit a flow through the filter mat (32) from the inside to the outside, the inner filter cavity (30), as the unfiltered medium side, is in fluidic connection with the oil sump of the associated oil pan (70) and **in that** the outside of the filter mat (32) comprises a support structure (42) surrounding the respective outer structural layers (44, 46, 60).

4. Filter apparatus according to any of the preceding claims, **characterised in that**, when the suction flow passes through the filter mat (32) from the outside to the inside, the inner filter cavity (30) forming the filtrate side, the filter mat (32) comprises an inner support structure (96) abutting the inner structural layer (44, 46, 60).

5. Filter apparatus according to any of the preceding claims, **characterised in that** the filter element (24) is received in the oil pan (70) in an inner housing (68), which comprises an inlet (62) leading to the inner filter cavity (30), the filtrate chamber (36) surrounding the filter element (24) and a fluid outlet (72) leading from said chamber to a suction port.

6. Filter apparatus according to claim 5, **characterised in that** the fluid inlet is formed by an opening (28) in the base (18) of the housing (2).

7. Filter apparatus according to either claim 5 or 6, **characterised in that** the fluid inlet is formed by a flat pipe (62) leading to the oil sump of the oil pan (70), said pipe being arranged on a side wall (8) of the housing (2) or inner housing (68) and in which a connection nozzle (64) of the filter element (24) engages, said nozzle being arranged off-centre on the facing end cap (22) of the filter element (24) and forming the connection to the filter cavity (30).

8. Filter apparatus according to claim 7, **characterised in that** the fluid outlet of the inner housing (68) is formed by a housing part (72) located next to the flat pipe (62) on the side wall (8) of the inner housing (68), said housing part forming a passage between the inner housing (68) filtrate chamber (36) surrounding the filter element (24) and the suction port (38).

## Revendications

1. Dispositif de filtration d'huile à engrenage, comprenant un élément (24) de filtre, qui est inséré dans une cuvette (70) d'huile à engrenage et dont le milieu (32) filtrant sépare un côté de non filtrat d'un espace pour le filtrat, qui communique fluidiquement avec une sortie (38, 50, 72), à laquelle peut être raccordé un dispositif de transport par dépression, comme une pompe aspirante à huile, dans lequel le milieu (32) filtrant de l'élément (24) de filtre a au moins une couche (46) de structure ayant une étendue en surface donnée à l'avance et ayant des propriétés de filtration pouvant être données à l'avance, ainsi qu'au moins une autre couche (44 ; 60) de structure ayant des propriétés de filtration pouvant être données à l'avance, dans lequel l'étendue en surface de l'autre couche (44 ; 60) de structure est différente de l'étendue en surface de la première couche (46) de structure, dans lequel les diverses couches (44, 46, 60) de structure entourent une cavité (30) intérieure de filtre, dans lequel les diverses couches (44, 46, 60) de structure sont plissées en ayant des plis de même type, et dans lequel les couches (44, 46, 60) de structure plissées s'étendent dans la direction axiale entre deux coiffes (22, 34) d'extrémité de l'élément (24) de filtre, **caractérisé en ce que,** considérée dans le sens de passage du courant de fluide à épurer, la couche (44 ; 60) respective de structure ayant la plus grande finesse de filtration suit une couche (46) de structure précédente ayant respectivement une finesse de filtration plus petite, **en ce que** l'élément (24) de filtre est prévu sous la forme d'un filtre plat dont le milieu filtrant entourant la cavité (30) de filtre a, sous la forme d'une nappe (32) filtrante, rapporté à un plan de coupe s'étendant parallèlement aux coiffes (22, 34) d'extrémité, une forme plate de la section transversale ayant des grands côtés (52, 54) plans de grande surface et des petits côtés (56, 58) arrondis, et **en ce que** l'élément (24) de filtre est tourné, par un grand côté (54), vers un fond de la cuvette (70) d'huile à engrenage associée.

2. Dispositif de filtration suivant la revendication 1, **caractérisé en ce que** les couches (44, 46, 60) de structure sont constituées d'une couche ou de plusieurs couches.

3. Dispositif de filtration suivant l'une des revendications précédentes, **caractérisé en ce que**, pour la traversée du milieu (32) filtrant de l'intérieur vers l'extérieur, la cavité (30) intérieure du filtre est, en tant que côté pour le non filtrat, en liaison fluidique avec le bain d'huile de la cuvette (70) à huile associée, et **en ce que** la nappe (32) filtrante a, du côté extérieur, une structure (42) d'appui entourant les couches (44, 46, 60) extérieures de structure respectives.

4. Dispositif de filtration suivant l'une des revendications précédentes, **caractérisé en ce que**, lors de la traversée de la nappe (32) filtrante par le courant aspiré de l'extérieur vers l'intérieur, la cavité (30) intérieure du filtre formant le côté pour le filtrat, la nappe (32) filtrante a une structure (96) intérieure d'appui s'appliquant à la couche (44, 46, 60) de structure intérieure.

5. Dispositif de filtration suivant l'une des revendications précédentes, **caractérisé en ce que** l'élément (24) de filtre est reçu dans la cuvette (70) à huile dans un logement (68) intérieur, qui a une entrée (62) menant à la cavité (30) intérieure du filtre, l'espace (36) pour le filtrat, entourant l'élément (24) de filtre, et une sortie (72) de fluide menant de celui-là à un raccord d'aspiration.

6. Dispositif de filtration suivant la revendication 5, **caractérisé en ce que** l'entrée de fluide est formée d'une ouverture (28) dans le fond (18) de l'enveloppe (2).

7. Dispositif de filtration suivant la revendication 5 ou 6, **caractérisé en ce que** l'entrée de fluide est formée d'un tuyau (62) plat, qui mène au bain d'huile de la cuvette (70) à huile, qui est disposé sur une paroi (8) latérale de l'enveloppe (2) ou d'un logement (68) intérieur et dans lequel pénètre une tubulure (64) de raccordement de l'élément (24) de filtre, qui est disposée en dehors du milieu sur la coiffe (22) d'extrémité associée de l'élément (24) de filtre et qui forme la communication avec la cavité (30) de filtre.

8. Dispositif de filtration suivant la revendication 7, **caractérisé en ce que** la sortie de fluide du logement (68) intérieur est formée d'une partie (72) se trouvant à côté du tuyau (62) plat sur la paroi (8) latérale de l'enveloppe (68) intérieure et formant un passage entre l'espace (36) pour le filtrat, entourant l'élément (24) de filtre, du logement (68) intérieur et le raccord (38) d'aspiration.
